# EUROPEAN PATENT SPECIFICATION

(11) **EP 3 239 573 B1**
(45) Date of publication and mention of the grant of the patent: **13.03.2019**
(21) Application number: 16167597.0
(22) Date of filing: 29.04.2016
(51) Int. Cl.: F16K 31/122, F16K 37/00, F16K 27/00, F15B 19/00

(54) **CONNECTOR BETWEEN CONTROLLER AND VALVE ACTUATOR**
VERBINDER ZWISCHEN STEUERUNG UND VENTILAKTUATOR
CONNECTEUR ENTRE UN CONTRÔLEUR ET UN ACTIONNEUR DE SOUPAPE

(43) Date of publication of application: 01.11.2017
(73) Proprietor: Alfa Laval Corporate AB, 221 00 Lund (SE)
(72) Inventor: LUND HENRIKSEN, Axel, DK-5000 ODENSE C (DK)
(74) Representative: Alfa Laval Attorneys

(56) References cited:
- EP-A1- 2 752 585
- US-A- 4 135 838
- US-A- 5 971 329
- US-B1- 6 361 019

## Description

### Technical Field

The invention relates to a controller for controlling the function of a valve actuator, and in particular to a connector for connecting the controller to a valve actuator. The invention also relates to an assembly of a valve actuator and a controller connected by a connector, and to a valve assembly including such an assembly.

### Background Art

It is common to operate valves by valve actuators. Typically, a valve actuator has a pneumatically driven piston operatively connected to the valve for opening and closing the valve. In some solutions, a controller is attached to the valve actuator that controls the function, or some of the functions, of the valve actuator.

In some solutions, a piston rod that is connected to the piston protrudes from the valve actuator and the position of the piston rod changes with the position of the piston inside the valve actuator. The controller typically has a sensor for controlling the position of the piston, and possibly also for determining the position of a valve member in the valve. In some solutions, the sensor is an integral part of the controller. Thus, the position of the controller relative to the actuator is important for controlling the function of the valve actuator.

The above described type of controllers typically encloses the piston rod and it is important that the controller is centered correctly on the piston rod. In known solutions, the controller has a set of screws, where each screw has a screw axis that is oriented radially with respect to the piston rod. When tightened, the tips of the screws move towards the piston rod and engage the valve actuator, for example protrusions specifically intended for locking to the screws. EP 2 752 585 A1 discloses one such solution where a valve arrangement comprises an actuator, a control unit and a valve. The control unit is attached at an upper part of the actuator by a connector arrangement in the form of knobs that are engaged by attachment screws of the control unit. However, if one screw is tightened more than the other screws, there is a significant risk that the controller will shift in the direction of the screw. This in turn causes a radial misalignment between the sensor in the controller and the piston rod, and the control accuracy is reduced.

Additionally, there is also a need for a strong coupling between the controller and the valve actuator. For example, if a valve actuator with a mounted controller is installed in a horizontal relationship, or upside down, the connection is subjected to significant forces by the weight of the controller. This may cause the controller to shift relative to the piston rod, or even the controller to break. In particular, there is a need for a connector that has screws that can be tightened hard, without risk of damaging the controller. There is also a need to reduce the risk of mistakes in the installation process of a valve actuator and its controller, and to make the installation process simple.

### Summary

It is an object of the invention to overcome the above described limitations and disadvantages of the prior art. In particular, it is an object to improve the accuracy of the mounting of a controller on a valve actuator, and in particular to avoid a radial misalignment between a controller and a piston rod of a valve actuator. It is a further object to provide a strong coupling between a controller and a valve actuator, in particular a coupling with a reduced risk of damaging the controller and that is easy use in an installation procedure.

To solve the above objects, an assembly comprising a valve actuator and a controller for controlling the function of the valve actuator is provided. The valve actuator comprises a housing having a first support surface and a first knob protruding from the first support surface. The valve actuator further comprises a piston and a piston rod connected to the piston, wherein the piston rod protrudes from the first support surface. The controller comprises a connector for connecting the controller to the valve actuator. The connector comprises: a base plate having a first side and a second side, a first aperture extending from the first side to the second side, and a second aperture extending from the first side to the second side. The second side has a second support surface that contacts and conforms to the first support surface. The first knob extends through the first aperture and the piston rod extends through the second aperture. The connector further comprises: a first lock attached to the base plate and located on the first side of the base plate and at the first aperture for locking the connector to the first knob. The first lock comprises a first screw having a first screw axle, wherein the first screw is configured to engage the first knob and oriented with the first screw axle transverse to a line between the piston rod and the first knob.

With this orientation of the screw, it will cause the connector and controller to rotate relative to the piston rod when tightened, thus avoiding or reducing the risk for radial shifts or misalignments.

The valve actuator may further comprise a second knob protruding from the first support surface in the same direction as the first knob. The base plate may further have a third aperture extending from the first side to the second side and the second knob may extend through the third aperture. Further, the connector may also comprise: a second lock attached to the base plate and located on the first side of the base plate and at the third aperture for locking the connector to the second knob. The second lock may comprise a second screw having a second screw axle, wherein the second screw is configured to engage the second knob and oriented with the second screw axle transverse to a line between the piston rod and the second knob.

Here, and throughout these specifications, a screw axle being transverse to a line between the piston rod and a knob is understood to encompass the screw axle being transverse to, or at a right angle to, a line between the center of the piston rod and the center of the knob and parallel to the first support surface and/or the second support surface. It is further understood to encompass the screw axle being transverse to, or at a right angle to, a line between the center of the first aperture and the center of the second aperture and parallel to the first support surface and/or the second support surface, and the screw axle being transverse or perpendicular to a line between the first knob and the second knob or between the first aperture and the third aperture, or the centers thereof. It is also understood to encompass the screw axle being oriented tangentially or circumferentially with respect to the piston rod and/or the second aperture, or the centers thereof.

The first screw axle may be parallel to the base plate or the second support surface at the first aperture. Similarly, the second screw axle may be parallel to the base plate or the second support surface at the third aperture. Alternatively, the first screw axle may define a first angle relative to the base plate or the second support surface at the first aperture, wherein the first angle is less than 30°. Similarly, the second screw axle may define a second angle relative to the base plate or the second support surface at the third aperture, wherein the second angle is less than 30°. The second angle may be equal to the first angle. Additionally or alternatively, the second support surface may be planar.

The piston rod may protrude from the housing of the valve actuator directly between and equidistantly from the first knob and the second knob. This means that the piston rod is at the center between the first knob and the second knob, and that all three are aligned. The first screw and the second screw may be oriented to move in opposite directions when tightened. This is a particularly advantageous arrangement for avoiding misalignments. Alternatively, the first screw and the second screw may be oriented to move in the same direction when tightened. This makes installations easier, since both screws are accessible from one side of the controller. Even so, a good alignment is readily achievable.

The first knob may have a proximal portion and a distal portion with the distal portion connected to the proximal portion and forming an overhang. The first knob and the second knob may be circular symmetric and the maximal diameter of the proximal portion may be smaller than the maximal diameter of the distal portion. The knobs described here allows for a strong coupling between the controller and the valve actuator.

The first lock may comprise: a first protrusion extending from the first side of the base plate and located at the first aperture, wherein the first protrusion has a distal end facing away from the base plate for engaging the overhang of the distal portion of the first knob. The first protrusion may be located on the opposite side of the first aperture from the first screw. This allows for a strong coupling between the controller and the valve actuator.

The distal end of the first protrusion may have a first contact surface for contacting the overhang, wherein the first contact surface is slanted with respect to the second support surface at the first aperture for forcing the base plate away from the distal portion of the first knob when the overhang is pressed against the distal end of the first protrusion for pressing the first support surface against the second support surface. Alternatively or additionally, the overhang may have a second contact surface facing the first side of the base plate, wherein the second contact surface is slanted with respect to the first support surface for forcing the base plate away from the distal portion of the first knob when the second contact surface is pressed against the distal end of the first protrusion and pressing the first support surface against the second support surface. These features all contribute to a strong connection between the controller and the valve actuator.

The first lock may comprise a second protrusion extending from the first side of the base plate and located at the first aperture on the opposite side of the first aperture from the first protrusion, and wherein the screw is operationally connected to the second protrusion for allowing the screw to move in the direction of the first protrusion when tightened.

The first screw may have a flat tip with a third contact surface facing and engaging the distal portion of the first knob. This allows for a reproducible and accurate engagement of the first screw, thus reducing the risk of misalignment of the controller due to the tightening of the screw.

The piston of the valve actuator may be configured to be operatively connected to a valve for controlling the function of the valve.

The above objects are also solved by a valve assembly comprising a valve and an assembly as described above. The piston of the valve actuator in the assembly may be configured to be operatively connected to the valve for controlling the function of the valve.

Still other objectives, features, aspects and advantages of the invention will appear from the following detailed description as well as from the drawings.

### Brief Description of the Drawings

Embodiments of the invention are described, by way of example, with reference to the accompanying schematic drawings, in which
Figs. 1a-c are a side view, a top view, and a perspective view of an embodiment of a connector.
Figs. 2a and 2b are perspective views of an embodiment of a valve actuator without and with a connector attached to valve actuator,
Figs. 3a-d are side views of an embodiment of a knob and a lock,
Figs. 4a-d are side views of another embodiment of a knob and a lock,
Figs. 5a and 5b are perspective views of an embodiment of a connector and a controller illustrating how the former is attached to the latter, and
Fig. 6 is a perspective view of an embodiment of a valve assembly.

### Detailed description

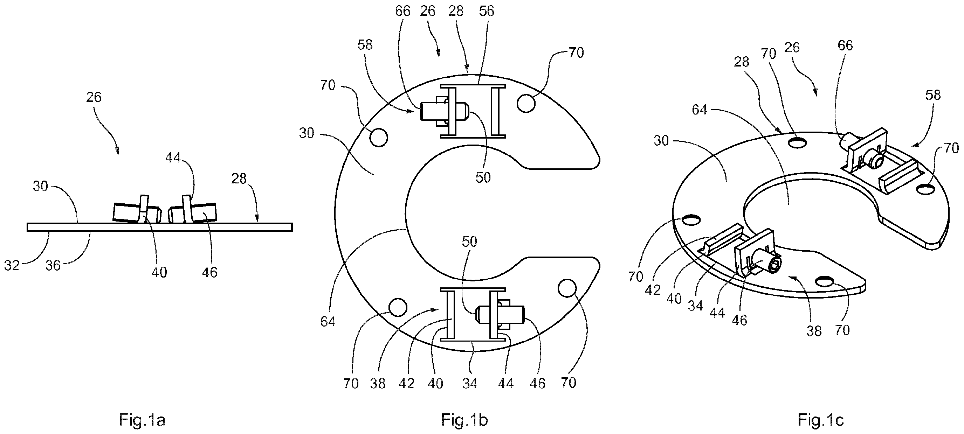

An embodiment of a connector 26 is shown in Figs. 1a-c. The connector 26 has a base plate 28 with a first side 30 and a second side 32. A first aperture 34, a second aperture 64, and a third aperture 56 extend between the first side 30 and the second side 32. Each of the first aperture 34 and the third aperture 56 can receive a knob, and the second aperture 64 can receive a piston rod, as will be further explained below. The connector has a flat second support surface 36 on its second side 32.

The connector 26 has a first lock 38 and a second lock 58 attached to the base plate 28. Both locks are located on the first side 30 of the base plate 28. The first lock 38 is located at the first aperture 34 and the second lock 58 is located at the third aperture 56. The first lock 38 has a first screw 46 with a first screw axle that is at a right angle to a line between the first aperture 34 and the third aperture 56. Similarly, the second lock 58 has a second screw 66 with a second screw axle that is at a right angle to a line between the third aperture 56 and the first aperture 34. The second aperture 64 is located directly between and equidistantly from the first aperture 34 and the third aperture 56.

The first screw 46 and the second screw 66 are set screws with flat tips 50. Each flat tip 50 has a planar third contact surface 52. They are oriented to move in opposite directions when tightened. In an alternative embodiment, the first screw 46 and the second screw 66 are oriented to move in the same direction when tightened. This is achieved by reorienting the second screw 66 to point in the opposite direction and position it on the other side of the third aperture 56.

The first lock 38 has a first protrusion 40 and a second protrusion 44 that extend from the first side 30 of the base plate 28 and are located on opposite sides of the first aperture 34. The second protrusion 44 has a threaded bore by which the first screw 46 is operationally connected to the second protrusion 44. The threaded bore orients the first screw 46 to move in the direction of the first protrusion 40 when tightened. The second lock 58 has corresponding protrusions as the first lock 38.

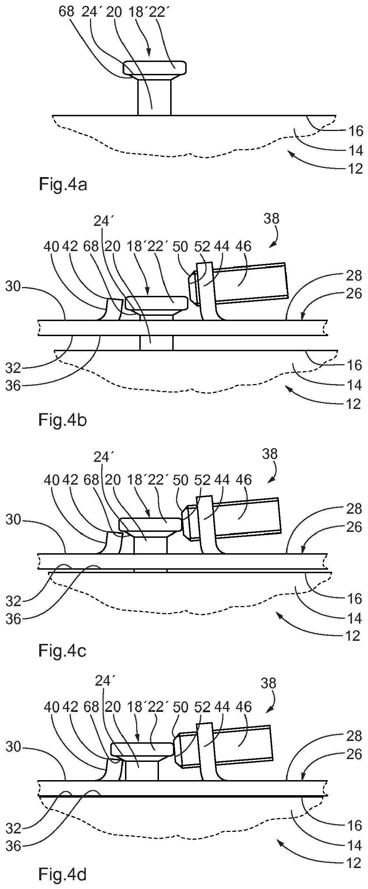

In the embodiment of Figs. 1a-c, the base plate 28 is manufactured from sheet metal and formed by punching and stamping. The first protrusion 40 and the second protrusion 44 are formed by bending portions of the sheet metal. The base plate 28 has four conical holes 70 going from the first side 30 to the second side 32 that can be used to attach the connector 26 to a controller, as is further discussed in relation to Figs. 4a and b.

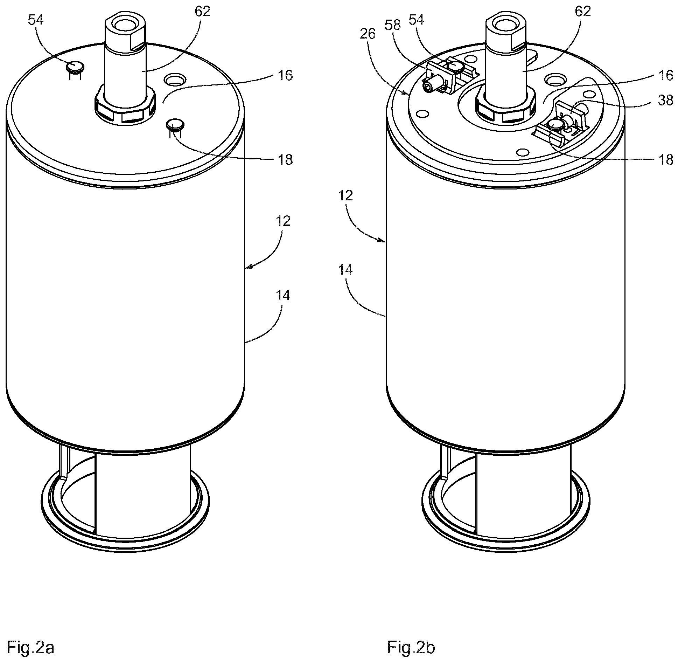

Fig. 2a is a perspective view of an embodiment of a valve actuator 12, and Fig. 2b is a corresponding perspective view with the connector 26 described in relation to Figs. 1a-c attached to valve actuator 12. The valve actuator 12 has a housing 14 with a flat circular top defining a flat first support surface 16. Thus, the second support surface 36 of the connector 26 can conform to the first support surface 16.

A first knob 18 and a second knob 54 protrude from the first support surface 16. The connector 26 is placed on the valve actuator 12 with the second support surface 36 planar with and touching the first support surface 16, and with the first knob 18 extending though the first aperture 34 and the second knob 54 extending through the third aperture 56, as is illustrated in Fig. 2b.

The valve actuator 12 has a piston rod 62 that is connected to a piston inside the housing 14 and move together with the piston. The piston rod 62 protrudes from the housing at the center of the first support surface 16 and extends through the center of the second aperture 64. The centers of the first knob 18, the second knob 54, and the piston rod 62 are positioned in line.

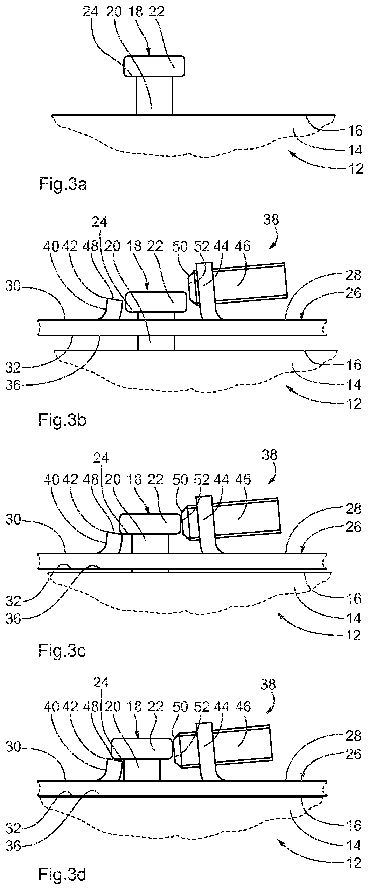

Figs. 3a-d are side views illustrating an embodiment of a lock and a knob that can be implemented in the embodiments described in relation to Figs. 1 and 2. Here, the description will refer to a first knob 18 and a first lock 38, but the described features and functions are also applicable for the second knob 54 and the second lock 58.

The first knob 18 has a proximal portion 20 attached to the housing 14 of the valve actuator 12. The first knob 18 also has a distal portion 22 attached to the proximal portion 20. Both portions are circular symmetric and the diameter of the proximal portion 20 is smaller than the diameter of the distal portion 22, thus forming an overhang 24 or an overall mushroom shape, as is illustrated in Fig. 3a.

The connector 26 is oriented and moved in position so that the first support surface 16 and the second support surface 36 are parallel and the first knob 18 enters the first aperture, as is illustrated in Fig 3b. The second support surface 36 is brought in close proximity of the first support surface 16, and the first screw 46 is tightened so that the third contact surface 52 of its tip 50 touches the proximal portion 20 of the first knob 18 and pushes the first protrusion 40 to touch the overhang 24, as is illustrated in in Fig. 3c.

The first protrusion 40 has a first contact surface 48 that is slanted with respect to the second support surface 36 at the first aperture. The first contact surface 48 engages the overhang 24 and when the first screw 46 is further tightened, as is illustrated in Fig. 3c, the connector 26 is forced by the slanted first contact surface 48 towards the valve actuator 12 and the second support surface 36 is pressed against first support surface 16. This way a strong and stable coupling to the valve actuator 12 is achieved.

Figs. 4a-d are side views illustrating another embodiment of a lock and a knob that can be implemented in the embodiments described in relation to Figs. 1 and 2. Only the differences with respect to the embodiment described in relation to Figs. 3a-d are described here. Features having the same function have been given the same number indexing. Those differing, but having a related function, have been primed.

As is shown from Fig. 4a, the first knob 18' has a proximal portion 20 attached to the housing 14 of the valve actuator 12. The first knob 18' also has a distal portion 22' attached to the proximal portion 20. Both portions are circular symmetric and the diameter of the proximal portion 20 is smaller than the diameter of the distal portion 22', thus forming an overhang 24'. The distal portion 22' has a conical shape where it connects to the proximal portion 20, thus forming an overhang 24' with a second contact surface 68 facing the first side 30 of the base plate 28 that is slanted with respect to the first support surface 16.

Subsequent to the first knob 18 entering the first aperture and the first screw 46 being tightened so that the third contact surface 52 of its tip 50 contacts the distal portion 22 of the first knob 18, as is illustrated in Fig. 4b, the distal end 42 of the first protrusion 40 engages the second contact surface 68 when the first screw 46 is further tightened, as is illustrated in Fig. 4c. The connector 26 is forced by the slanted second contact surface 68 towards the valve actuator 12 and the second support surface 36 is pressed against first support surface 16.

The two alternative embodiments of a knob and a lock disclosed in relation to Figs. 3 and 4 both allows for a contact between the first support surface 16 and the complete second support surface 36, which gives a stable support of a controller.

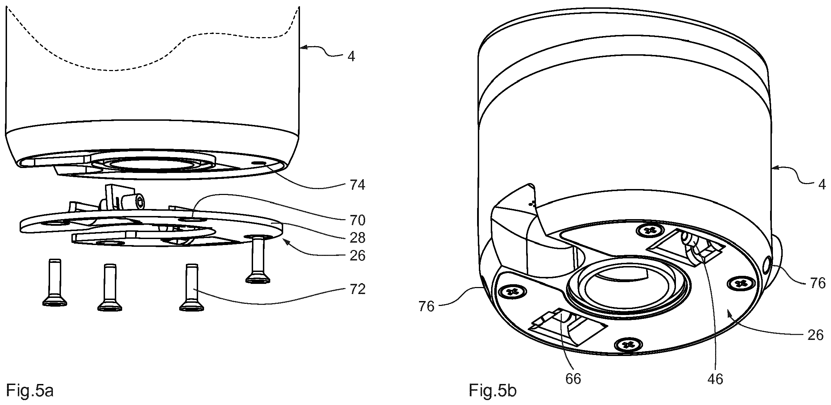

Figs. 5a and 5b are perspective views of an embodiment of a controller 4 with a connector 26. Four screws 72 are inserted in the conical holes 70 of the connector 26 and receiving holes 74 of the controller 4. When tightened, the screws 74 attach the connector 26 to the controller. The screws 74 have flat cone-shaped heads so that they sink into the conical holes 70 when tightened. The controller 4 has access holes 76 through which the first screw 46 and the second screw 66 can be reached and tightened. It has been shown here that the connector 26 is configured to be connected to the controller 4.

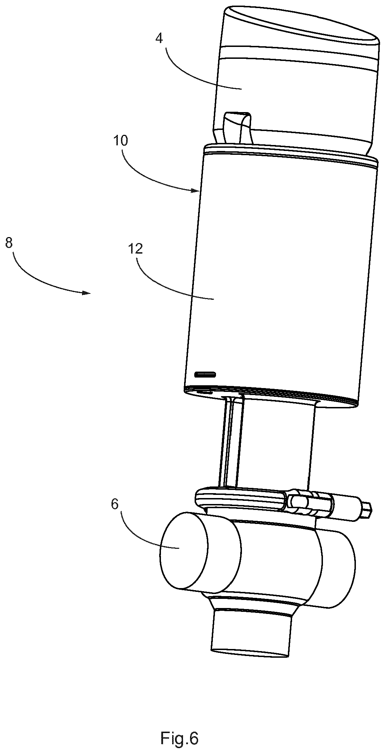

Fig. 6 is a perspective view of an embodiment of a valve assembly 8. The valve assembly 8 has a valve 6. The valve is operated by an assembly 10 of a valve actuator 12 operatively connected to the valve 6 and a controller 4 that controls the function of the valve actuator 12.

From the description above follows that, although various embodiments of the invention have been described and shown, the invention is not restricted thereto, but may also be embodied in other ways within the scope of the subject-matter defined in the following claims.

### Item list

- 4: controller
- 6: valve
- 8: valve assembly
- 10: assembly
- 12: valve actuator
- 14: housing
- 16: first support surface
- 18: first knob
- 20: proximal portion
- 22: distal portion
- 24: overhang
- 26: connector
- 28: base plate
- 30: first side
- 32: second side
- 34: first aperture
- 36: second support surface
- 38: first lock
- 40: first protrusion
- 42: distal end
- 44: second protrusion
- 46: first screw
- 48: first contact surface
- 50: tip
- 52: third contact surface
- 54: second knob
- 56: third aperture
- 58: second lock
- 62: piston rod
- 64: second aperture
- 66: second screw
- 68: second contact surface
- 70: conical bore
- 72: screw with conical head
- 74: receiving holes
- 76: access hole

## Claims

1. An assembly (10) comprising a valve actuator (12) and a controller (4) for controlling the function of the valve actuator (12), wherein the valve actuator (12) comprises a housing (14) having a first support surface (16) and a first knob (18) protruding from the first support surface (16), wherein the valve actuator (12) further comprises a piston and a piston rod (62) connected to the piston, wherein the piston rod (62) protrudes from the first support surface (16), and wherein the controller (4) comprises a connector (26) for connecting the controller (4) to the valve actuator (12), and **characterized in that** the connector (26) comprises:
a base plate (28) having a first side (30) and a second side (32), a first aperture (34) extending from the first side (30) to the second side (32), and a second aperture (64) extending from the first side (30) to the second side (32), wherein the second side (32) has a second support surface (36) that contacts and conforms to the first support surface (16), and wherein the first knob (18) extends through the first aperture (34) and the piston rod (62) extends through the second aperture (64), and
a first lock (38) attached to the base plate (28) and located on the first side (30) of the base plate (28) and at the first aperture (34) for locking the connector (26) to the first knob (18), wherein the first lock (38) comprises a first screw (46) having a first screw axle, wherein the first screw (46) is configured to engage the first knob (18) and oriented with the first screw axle transverse to a line between the piston rod (62) and the first knob (18).

2. The assembly (10) according to claim 1, wherein the valve actuator (12) further comprises a second knob (54) protruding from the first support surface (16) in the same direction as the first knob (18), the base plate (28) further has a third aperture (56) extending from the first side (30) to the second side (32) and the second knob (54) extends through the third aperture (56), and wherein the connector (26) further comprises:
a second lock (58) attached to the base plate (28) and located on the first side (30) of the base plate (28) and at the third aperture (56) for locking the connector (26) to the second knob (54), wherein the second lock (58) comprises a second screw (66) having a second screw axle, wherein the second screw (66) is configured to engage the second knob (54) and oriented with the second screw axle transverse to a line between the piston rod (62) and the second knob (54).

3. The assembly (10) according to claim 2, wherein the piston rod (62) protrudes from the housing (14) of the valve actuator (12) directly between and equidistantly from the first knob (18) and the second knob (54).

4. The assembly (10) according to claim 2 or 3, wherein the first screw (46) and the second screw (66) are oriented to move in opposite directions when tightened.

5. The assembly (10) according to claim 2 or 3, wherein the first screw (46) and the second screw (66) are oriented to move in the same direction when tightened.

6. The assembly (10) according to any of the claims 1-5, wherein the first knob (18) has a proximal portion (20) and a distal portion (22), and the distal portion (22) is connected to the proximal portion (20) and forms an overhang (24).

7. The assembly (10) according to claim 6, wherein the first lock (38) comprises:
a first protrusion (40) extending from the first side (30) of the base plate (28) and located at the first aperture (34), wherein the first protrusion (40) has a distal end (42) facing away from the base plate (28) for engaging the overhang (24) of the distal portion (22) of the first knob (18).

8. The assembly (10) according to claim 7, wherein the distal end (42) has a first contact surface (48) for contacting the overhang (24), wherein the first contact surface (48) is slanted with respect to the second support surface (36) at the first aperture (34) for forcing the base plate (28) away from the distal portion (22) of the first knob (18) when the overhang (24) is pressed against the distal end (42) of the first protrusion (40) and pressing the first support surface (16) against the second support surface (36).

9. The assembly (10) according to claim 7 or 8, wherein the overhang (24) has a second contact surface (68) facing the first side (30) of the base plate (28), wherein the second contact surface (68) is slanted with respect to the first support surface (16) for forcing the base plate (28) away from the distal portion (22) of the first knob (18) when the second contact surface (68) is pressed against the distal end (42) of the first protrusion (40) and pressing the first support surface (16) against the second support surface (36).

10. The assembly (10) according to any of the claims 1-9, wherein the first screw (46) has a flat tip (50) with a third contact surface (52) facing and engaging the distal portion (22) of the knob.

11. A valve assembly (8) comprising a valve (6) and an assembly according to any of the claims 1-10 for controlling the valve (6).

## Patentansprüche

1. Baugruppe (10), die einen Ventil-Stellantrieb (12) und eine Steuerung (4) zum Steuern der Funktion des Ventil-Stellantriebs (12) umfasst, wobei der Ventil-Stellantrieb (12) ein Gehäuse (14) umfasst, das eine erste Stützfläche (16) und einen ersten Knopf (18), der von der ersten Stützfläche (16) vorspringt, umfasst, wobei der Ventil-Stellantrieb (12) ferner einen Kolben und eine Kolbenstange (62), die mit dem Kolben verbunden ist, umfasst, wobei die Kolbenstange (62) von der ersten Stützfläche (16) vorspringt, und wobei die Steuerung (4) einen Verbinder (26) zum Verbinden der Steuerung (4) mit dem Ventil-Stellantrieb (12) umfasst, und **dadurch gekennzeichnet, dass** der Verbinder (26) Folgendes umfasst:
eine Grundplatte (28), die eine erste Seite (30) und eine zweite Seite (32), eine erste Öffnung (34), die sich von der ersten Seite (30) zu der zweiten Seite (32) erstreckt, und eine zweite Öffnung (64), die sich von der ersten Seite (30) zu der zweiten Seite (32) erstreckt, aufweist, wobei die zweite Seite (32) eine zweite Stützfläche (36) aufweist, welche die erste Stützfläche (16) berührt und sich an dieselbe anpasst, und wobei sich der erste Knopf (18) durch die erste Öffnung (34) erstreckt und sich die Kolbenstange (62) durch die zweite Öffnung (64) erstreckt, und
eine erste Verriegelung (38), die an der Grundplatte (28) befestigt und auf der ersten Seite (30) der Grundplatte (28) und an der ersten Öffnung (34) angeordnet ist, zum Verriegeln des Verbinders (26) an dem ersten Knopf (18), wobei die erste Verriegelung (38) eine erste Schraube (46) umfasst, die eine erste Schraubenachse aufweist, wobei die erste Schraube (46) dafür konfiguriert ist, den ersten Knopf (18) in Eingriff zu nehmen, und mit der ersten Schraubenachse quer zu einer Linie zwischen der Kolbenstange (62) und dem ersten Knopf (18) ausgerichtet ist.

2. Baugruppe (10) nach Anspruch 1, wobei der Ventil-Stellantrieb (12) ferner einen zweiten Knopf (54) umfasst, der von der ersten Stützfläche (16) in der gleichen Richtung wie der erste Knopf (18) vorspringt, wobei die Grundplatte (28) ferner eine dritte Öffnung (56), die sich von der ersten Seite (30) zu der zweiten Seite (32) erstreckt, aufweist und sich der zweite Knopf (54) durch die dritte Öffnung (56) erstreckt, und wobei der Verbinder (26) ferner Folgendes umfasst:
eine zweite Verriegelung (58), die an der Grundplatte (28) befestigt und auf der ersten Seite (30) der Grundplatte (28) und an der dritten Öffnung (56) angeordnet ist, zum Verriegeln des Verbinders (26) an dem zweiten Knopf (54), wobei die zweite Verriegelung (58) eine zweite Schraube (66) umfasst, die eine zweite Schraubenachse aufweist, wobei die zweite Schraube (66) dafür konfiguriert ist, den zweiten Knopf (54) in Eingriff zu nehmen, und mit der zweiten Schraubenachse quer zu einer Linie zwischen der Kolbenstange (62) und dem zweiten Knopf (54) ausgerichtet ist.

3. Baugruppe (10) nach Anspruch 2, wobei die Kolbenstange (62) von dem Gehäuse (14) des Ventil-Stellantriebs (12) unmittelbar zwischen und in gleichem Abstand von dem ersten Knopf (18) und dem zweiten Knopf (54) vorspringt.

4. Baugruppe (10) nach Anspruch 2 oder 3, wobei die erste Schraube (46) und die zweite Schraube (66) so ausgerichtet sind, dass sie sich in entgegengesetzten Richtungen bewegen, wenn sie angezogen werden.

5. Baugruppe (10) nach Anspruch 2 oder 3, wobei die erste Schraube (46) und die zweite Schraube (66) so ausgerichtet sind, dass sie sich in der gleichen Richtung bewegen, wenn sie angezogen werden.

6. Baugruppe (10) nach einem der Ansprüche 1 bis 5, wobei der erste Knopf (18) einen proximalen Abschnitt (20) und einen distalen Abschnitt (22) aufweist und der distale Abschnitt (22) mit dem proximalen Abschnitt (20) verbunden ist und einen Überhang (24) bildet.

7. Baugruppe (10) nach Anspruch 6, wobei die erste Verriegelung (38) Folgendes umfasst:
einen ersten Vorsprung (40), der sich vom der ersten Seite (30) der Grundplatte (28) erstreckt und an der ersten Öffnung (34) angeordnet ist, wobei der erste Vorsprung (40) ein distales Ende (42), das von der Grundplatte (28) weg zeigt, aufweist, um den Überhang (24) des distalen Abschnitts (22) des ersten Knopfs (18) in Eingriff zu nehmen.

8. Baugruppe (10) nach Anspruch 7, wobei das distale Ende (42) eine erste Berührungsfläche (48) zum Berühren des Überhangs (24) aufweist, wobei die erste Berührungsfläche (48) in Bezug auf die zweite Stützfläche (36) an der ersten Öffnung (34) geneigt ist, um die Grundplatte (28) von dem distalen Abschnitt (22) des ersten Knopfs (18) weg zu drängen, wenn der Überhang (24) gegen das distale Ende (42) des ersten Vorsprungs (40) gepresst wird, und die erste Stützfläche (16) gegen die zweite Stützfläche (36) zu pressen.

9. Baugruppe (10) nach Anspruch 7 oder 8, wobei der Überhang (24) eine zweite Berührungsfläche (68) aufweist, die zu der ersten Seite (30) der Grundplatte (28) zeigt, wobei die zweite Berührungsfläche (68) in Bezug auf die erste Stützfläche (16) geneigt ist, um die Grundplatte (28) von dem distalen Abschnitt (22) des ersten Knopfs (18) weg zu drängen, wenn die zweite Berührungsfläche (68) gegen das distale Ende (42) des ersten Vorsprungs (40) gepresst wird, und die erste Stützfläche (16) gegen die zweite Stützfläche (36) zu pressen.

10. Baugruppe (10) nach einem der Ansprüche 1 bis 9, wobei die erste Schraube (46) eine flache Spitze (50) mit einer dritten Berührungsfläche (52) aufweist, die zu dem distalen Abschnitt (22) des Knopfs zeigt und denselben in Eingriff nimmt.

11. Ventilbaugruppe (8), die ein Ventil (6) und eine Baugruppe nach einem der Ansprüche 1 bis 10 zum Steuern des Ventils (6) umfasst.

## Revendications

1. Ensemble (10), comprenant un actionneur de soupape (12) et un dispositif de commande (4) pour contrôler la fonction de l'actionneur de soupape (12), l'actionneur de soupape (12) comprenant un boîtier (14) comportant une première surface de support (16) et un premier bouton (18) faisant saillie de la première surface de support (16), l'actionneur de soupape (12) comprenant en outre un piston et une tige de piston (62) connectée au piston, dans lequel la tige de piston (62) déborde de la première surface de support (16), et dans lequel le dispositif de commande (4) comprend un connecteur (26) pour connecter le dispositif de commande (4) à l'actionneur de soupape (12), et **caractérisé en ce que** le connecteur (26) comprend :
une plaque de base (28) comportant un premier côté (30) et un deuxième côté (32), une première ouverture (34) s'étendant du premier côté (30) vers le deuxième côté (32), et une deuxième ouverture (64) s'étendant du premier côté (30) vers le deuxième côté (32), dans lequel le deuxième côté (32) comporte une deuxième surface de support (36) contactant la première surface de support (16) et adaptée à celle-ci, et dans lequel le premier bouton (18) s'étend à travers la première ouverture (34), la tige de piston (62) s'étendant à travers la deuxième ouverture (64) ; et
un premier verrou (38) fixé sur la plaque de base (28) et agencé sur le premier côté (30) de la plaque de base (28) et au niveau de la première ouverture (34) pour verrouiller le connecteur (26) sur le premier bouton (18), dans lequel le premier verrou (38) comprend une première vis (46) comportant un premier essieu de vis, dans lequel la première vis (46) est configurée pour s'engager dans le premier bouton (18) et est orientée avec le premier essieu de vis de manière transversale à une ligne entre la tige de piston (62) et le premier bouton (18).

2. Ensemble (10) selon la revendication 1, dans lequel l'actionneur de soupape (12) comprend en outre un deuxième bouton (54) faisant saillie de la première surface de support (16), dans la même direction que le premier bouton (18), la plaque de base (28) comportant en outre une troisième ouverture (56) s'étendant du premier côté (30) vers le deuxième côté (32) et le deuxième bouton (54) s'étendant à travers la troisième ouverture (56), et dans lequel le connecteur (26) comprend en outre :
un deuxième verrou (58) fixé sur la plaque de base (28) et agencé sur le premier côté (30) de la plaque de base (28) et au niveau de la troisième ouverture (56) pour verrouiller le connecteur (26) sur le deuxième bouton (54), le deuxième verrou (58) comprenant une deuxième vis (66) comportant un deuxième essieu de vis, dans lequel la deuxième vis (66) est configurée pour s'engager dans le deuxième bouton (54) et est orientée avec le deuxième essieu de vis de manière transversale à une ligne entre la tige de piston (62) et le deuxième bouton (54).

3. Ensemble (10) selon la revendication 2, dans lequel la tige de piston (62) fait saillie du boîtier (14) de l'actionneur de soupape (12), directement entre le premier bouton (18) et le deuxième bouton (54) et à une distance égale de ceux-ci.

4. Ensemble (10) selon les revendications 2 ou 3, dans lequel la première vis (46) et la deuxième vis (66) sont orientées de sorte à se déplacer dans des directions opposées lors de leur serrage.

5. Ensemble (10) selon les revendications 2 ou 3, dans lequel la première vis (46) et la deuxième vis (66) sont orientées de sorte à se déplacer dans la même direction lors de leur serrage.

6. Ensemble (10) selon l'une quelconque des revendications 1 à 5, dans lequel le premier bouton (18) comporte une partie proximale (20) et une partie distale (22), la partie distale (22) étant connectée à la partie proximale (20) et formant une partie en surplomb (24).

7. Ensemble (10) selon la revendication 6, dans lequel le premier verrou (38) comprend :
une première saillie (40) s'étendant à partir du premier côté (30) de la plaque de base (28) et agencée au niveau de la première ouverture (34), dans lequel la première saillie (40) comporte une extrémité distale (42) orientée à l'écart de la plaque de base (28) afin de s'engager dans la partie en surplomb (24) de la partie distale (22) du premier bouton (18).

8. Ensemble (10) selon la revendication 7, dans lequel l'extrémité distale (42) comporte une première surface de contact (48) destinée à contacter la partie en surplomb (24), la première surface de contact (48) étant inclinée par rapport à la deuxième surface de support (36) au niveau de la première ouverture (34) pour pousser de force la plaque de base (28) à l'écart de la partie distale (22) du premier bouton (18) lorsque la partie en surplomb (24) est pressée contre l'extrémité distale (42) de la première saillie (40) et pour presser la première surface de support (16) contre la deuxième surface de support (36).

9. Ensemble (10) selon les revendications 7 ou 8, dans lequel la partie en surplomb (24) comporte une deuxième surface de contact (68) faisant face au premier côté (30) de la plaque de base (28), la deuxième surface de contact (68) étant inclinée par rapport à la première surface de support (16) pour pousser de force la plaque de base (28) à l'écart de la partie distale (22) du premier bouton (18) lorsque la deuxième surface de contact (68) est pressée contre l'extrémité distale (42) de la première saillie (40) et pour presser la première surface de support (16) contre la deuxième surface de support (36).

10. Ensemble (10) selon l'une quelconque des revendications 1 à 9, dans lequel la première vis (46) comporte une pointe plate (50), avec une troisième surface de contact (52) faisant face à la partie distale (22) du bouton et s'engageant dans celle-ci.

11. Ensemble de soupape (8) comprenant une soupape (6) et un ensemble selon l'une quelconque des revendications 1 à 10 pour contrôler la soupape (6).
